# EUROPEAN PATENT APPLICATION

(11) **EP 2 549 387 A1**
(43) Date of publication of application: **23.01.2013**
(21) Application number: 12188638.6
(22) Date of filing: 18.06.2009
(51) Int. Cl.: G06F 15/16, G06F 9/44, H04L 12/24, G06F 9/50

(54) **Management layer method and apparatus for dynamic assignment of users to computer resources**

(30) Priority: 20.06.2008 US 74319 P
(62) Divisional of application: 09767772.8
(71) Applicant: Leostream Corp., Waltham, MA 02452 (US)
(72) Inventor: Crosbie, David, Sommerville, MA 02144 (US)
(74) Representative: Tuckett, William John

(57) **Abstract**

A method and apparatus for management and control of remote computer resources. The method and apparatus creates and maintains a hierarchical data model for determining the characteristics and state of a particular remote computer resource to ensure the most appropriate control system is used to manage that particular remote computer resource. The data model used sorts and categorizes remote computing resources into groups and assigns resources from within these groups to users according to the user's needs and rights and the characteristics of the computing resources within each group. The state of the remote computing resource is tracked and automatically changes the state in accordance with changes in external variables or internal logic rules.

## Description

### Cross Reference to Related Applications

This application claims the benefit of and priority from United States provisional patent application serial number 61/074,319 filed on 20 JUNE 2008 and incorporated in its entirety herein by reference.

### Field of the Invention

The present invention relates generally to the management and control of remote computer resources. More particularly, the present invention relates to a method and apparatus that creates and maintains a hierarchical data model for determining the characteristics and state of a particular remote computer resource and ensuring that the most appropriate control system is used to manage that particular remote computer resource.

### Background of the Invention

Computer architectures go in and out of favor as the relative costs and benefits of the different approaches changes with the introduction of new technology.

The latest technology change is the introduction of Virtual Hosted Desktops - dedicated desktop operating systems running within virtual machines.

This complements existing solutions such as Microsoft Terminal Services, Citrix Presentation Server Sessions, and Hosted Desktops running within physical machines.

The proliferation of different centrally hosted resources and the need to integrate the complete solution with existing datacenter and desktop infrastructure as well as corporate business process has created the need for a Connection Broker. A Connection Broker is a central management system that can assign computing resources to users according to their needs. One such type of Connection Broker can be found, for example, in United States Patent Application Serial No. 11/689,113 filed on 21 MARCH 2007 and titled MANAGEMENT LAYER METHOD AND APPARATUS FOR DYNAMIC ASSIGNMENT OF USERS TO COMPUTER RESOURCES which was published on 25 SEPTEMBER 2008 as United States Patent Application Publication 2008/0235361 and herein incorporated by reference.

One of the features for a Connection Broker is to catalogue within a hierarchical model all the available computing resources and all the meta-data that surrounds those resources.

Meta-data includes both permanent and temporary data. An example of the former is the type of operating system, while an example of the latter is which user is logged into the system and whether they are disconnected or not.

The problem with this meta-data is that there is no central location for this data - instead the Connection Broker needs to query a series of agents and external systems in order to gather the information.

The problem is further complicated by the fact that conflicting information can be gathered from different sources because some are able to provide more up to date information than others. So, for example, the Authentication Server knows when a user logs in, but does not know when that user disconnects from the session - while if there is an agent running within the Hosted Desktop it will know the precise state of all users logged into that Hosted Desktop, and hence its information should supersede that of the Authentication Server.

In addition, the Connection Broker needs to know which agent or external system controls a particular feature of a Hosted Desktop. So, for example, if the Hosted Desktop can be shut down by either the agent running within the Hosted Desktop or by the virtualization management layer - but the latter can only cleanly shut down the Operating System in certain circumstances while the former will only work if the operating system is running correctly then an intelligent choice needs to be made based on the system configuration.

Finally the Connection Broker needs to keep a track of the state of each remote computing resource - this includes, but is not limited to, information such as to the power state, whether it has been offered to any other user, whether it has been offered to that user before, and the load on the host that is powering that particular remote computing resource.

### Summary of the Invention

It is the object of the present invention to obviate or mitigate at least one disadvantage of previous mechanisms for managing remote computer resources, and more particularly hosted desktops. In general, the present invention provides a method and apparatus in the form of a management layer that collates and sorts information about remote computer resources in such a way that the most appropriate computer resource is assigned to a particular user or client device according to their needs and the remote computing resources available at that time.

As a manner of management and control of remote computer resources the present invention forms a method and apparatus that creates and maintains a hierarchical data model for determining the characteristics and state of a particular remote computer resource and ensures that the most appropriate control system is used to manage that particular remote computer resource. Using this data model the present invention uses this data model to sort and categorize remote computing resources into groups and assigns resources from within these groups to users according to the user's needs and rights and the characteristics of the computing resources within each group. Further the invention tracks the state of the remote computing resource and automatically changes the state in accordance with changes in external variables, or internal logic rules.

In the first aspect, the present invention provides a method of managing remote computing resources, the method includes: discovering remote computing resources by means of external agents and external management systems; determining the characteristics of the discovered remote computing resources; sorting the characteristics into a hierarchy according to the source of the data; assigning control of particular remote computing resources to external agents or systems according to the hierarchy previously established; sorting the remote computing resources into pools according to these characteristics and predetermined rules; and further sorting of the remote computing resources into sub pools according to the state of that resource. The method forms a management layer embodied within one or more computer processing units in the form of executable software instructions.

In a further embodiment, the present invention provides a method of managing remote computing resources, the method includes: gathering meta-data describing a particular remote computing resource; and consolidating the meta-data within a central database such that a most accurate source of a particular variable is given highest prominence. The method further uses the meta-data to determine a most appropriate manner for controlling a remote computer resource. The method further uses the meta-data so as to group one or more of the remote computer resources having equivalent properties into categories identified as pools. The method further gathers the meta-data alongside user and client data and uses the meta-data and the user and client data so as to maintain the state of each remote computer resource.

In a further embodiment, the present invention provides a management layer apparatus that manages remote computing resources, the apparatus includes: a processing unit for discovering remote computing resources by means of external agents and external management systems; a processing unit for determining the characteristics of the discovered remote computing resources; a processing unit for sorting the characteristics into a hierarchy according to the source of the data; a processing unit for assigning control of particular remote computing resources to external agents or systems according to the hierarchy previously established; a processing unit for sorting the remote computing resources into pools according to these characteristics and predetermined rules; and a processing unit for further sorting of the remote computing resources into sub pools according to the state of that resource; wherein the processing units are embodied within one or more computer processing units in the form of executable software instructions.

In an additional embodiment, the present invention provides a management layer apparatus that manages remote computing resources, the apparatus includes: a processing unit for gathering meta-data describing a particular remote computing resource; and a processing unit for consolidating the meta-data within a central database such that a most accurate source of a particular variable is given highest prominence; wherein the processing units are embodied within one or more computer processing units in the form of executable software instructions. The apparatus further includes a processing unit using the meta-data to determine a most appropriate manner for controlling a remote computer resource. The apparatus further includes a processing unit using the meta-data so as to group one or more of the remote computer resources having equivalent properties into categories identified as pools. The apparatus further includes a processing unit that gathers the meta-data alongside user and client data and uses the meta-data and the user and client data so as to maintain the state of each remote computer resource.

### Brief Description of the Drawings

Embodiments of the present invention will now be described, by way of example only, with reference to the attached Figures.

**Figure 1** shows the overall network architecture in accordance with the present invention.

**Figure 2** shows an example of the data gathered from three different sources and how they overlap.

**Figure 3** shows an example of cascading pools with their associated hosted desktops (a particular type of remote computing resource).

**Figure 4** shows an example of the possible states that a remote computer resource could have.

### Detailed Description

Generally, the present invention provides a method and apparatus in the form of a management layer that collates and sorts information about remote computer resources in such a way that the most appropriate computer resource is assigned to a particular user or client device according to their needs and the remote computing resources available at that time. It should be understood that the most appropriate computer resource may be a computer resource including, but not limited to any computing mechanism such as a desktop or computing application. Accordingly, the term computer resource is intended to encompass both desktops and applications.

The management layer is embodied within one or more computer processing units in the form of executable software instructions. In addition, the present invention uses the data gathered to determine the most appropriate method for controlling the remote computer resource.

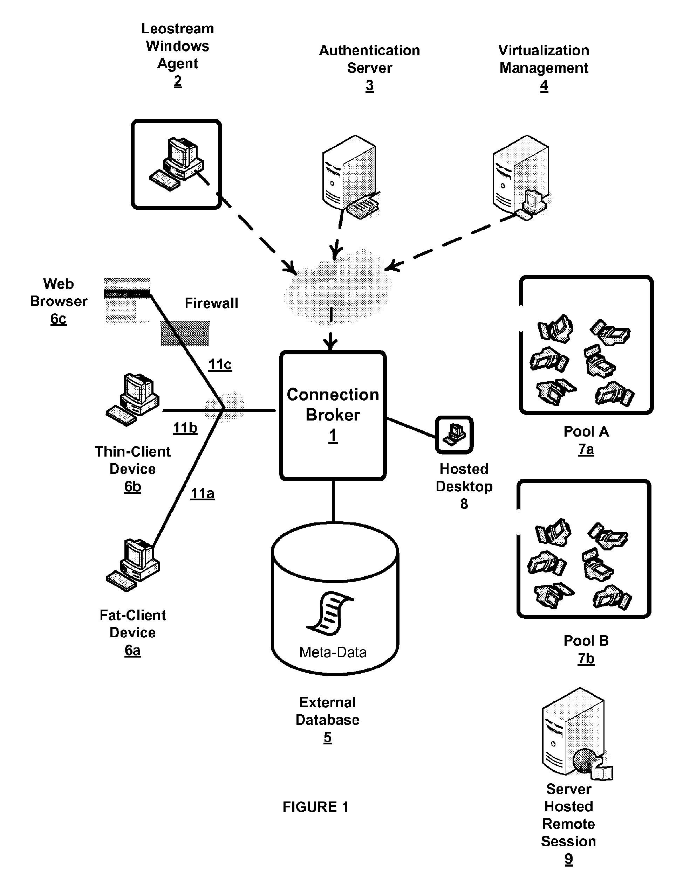

With regard to **Figure 1****,** an overall network architecture diagram in accordance with the present invention is shown. The end-user may be either a fat-client **6a,** a thin-client **6b,** or a web-client **6c** (shown firewalled). A network management mechanism in the form of a connection broker (CB) **1** is operatively coupled between the client (thin, fat, or web) and a Hosted Desktop **8** that has been drawn either from Pool A **7a** or Pool B **7b.** Alternatively the remote computing resource may be a server hosted remote session **9,** such as Microsoft Terminal Services.

The network **11** typically carries data using electrical signaling, optical signaling, wireless signaling, a combination thereof, or any other signaling method known to the networking art. Accordingly, it should be readily apparent that the network **11** can be a fixed channel telecommunications link such as a T1, T3, or 56 kb line; local area network (LAN) or wide area network (WAN) links; a packet-switched network; a packet-switched network of networks such as the Internet; or any other network configuration known to the art. The network **11** typically carries data in a variety of protocols, including but not limited to: user datagram protocol (UDP), asynchronous transfer mode (ATM), X.25, and transmission control protocol (TCP).

Before a remote computer resource (Hosted Desktop **8,** or Server Hosted Remote Session **9)** can be assigned to a user it has to be discovered by the Connection Broker. This discovery is done using either an Agent **2** (such as hosted desktop agents as shown and described in as United States Patent Application Serial No. 11/689,113 filed on 21 MARCH 2007 and titled MANAGEMENT LAYER METHOD AND APPARATUS FOR DYNAMIC ASSIGNMENT OF USERS TO COMPUTER RESOURCES which was published on 25 SEPTEMBER 2008 as United States Patent Application Publication 2008/0235361 and herein incorporated by reference), or a third party management system, such as an authentication system **3,** or a virtualization management system **4.** Such authentication system **3** or virtualization management system **4** are known within the art and are not therefore further described herein. As discussed above, the discovery resources are either an agent or from external management systems. It should also be understood that users may also specify resources, for example, by uploading data from a Comma Separated Value (CSV) file or by specifying IP addresses as a method for registering resources with the Connection Broker.

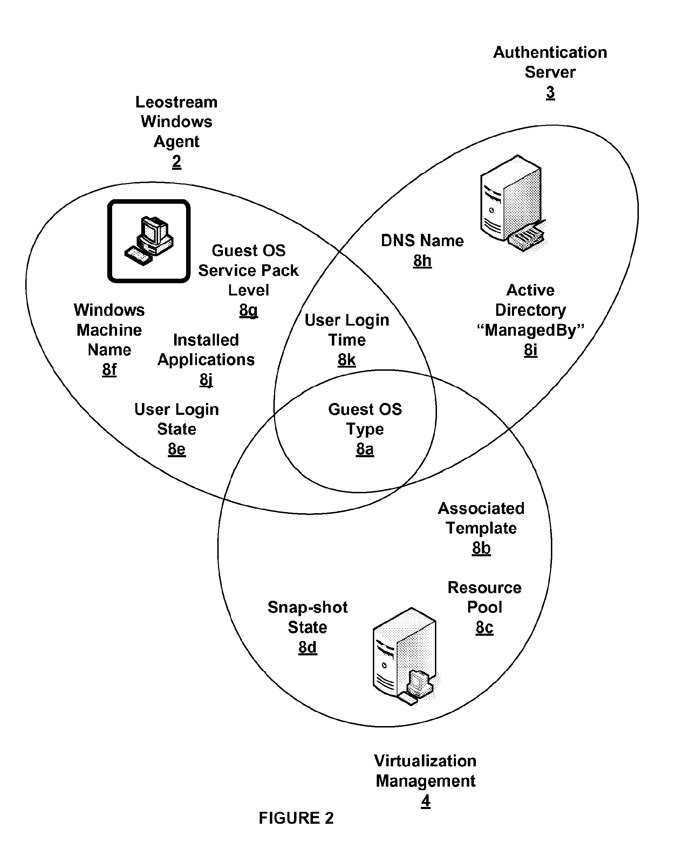

Once discovered, the remote computing resources are sorted into Pools **7a** and **7b** according to the characteristics of these resources. With regard to **Figure 2** the Characteristics include, but are not limited to, the operating system running within the Hosted Desktop or Server Hosted Remote Session (Guest OS Type **8a,** Windows Machine Name **8f,** DNS Name **8h,** Guest OS Service Pack Level **8g,** Installed Applications **8j),** the Hosted Desktop itself (Associated Template **8b,** Resource Pool **8c,** Snapshot State **8d),** or the system user (User Login State **8e,** or User Login Time **8k).** As will be apparent to one of ordinary skill in the art, a variety of pools may also be formed by the number of Central Processing Units (CPUs) or Network Interface Controllers (NICs) as well as pools of memory or IP address characteristics. Each of these characteristics is obtained by querying one or more sources - so that the Guest OS Type **8a** can be determined by querying either the Agent **2,** the Authentication Server **3,** or the Virtualization Management **4.**

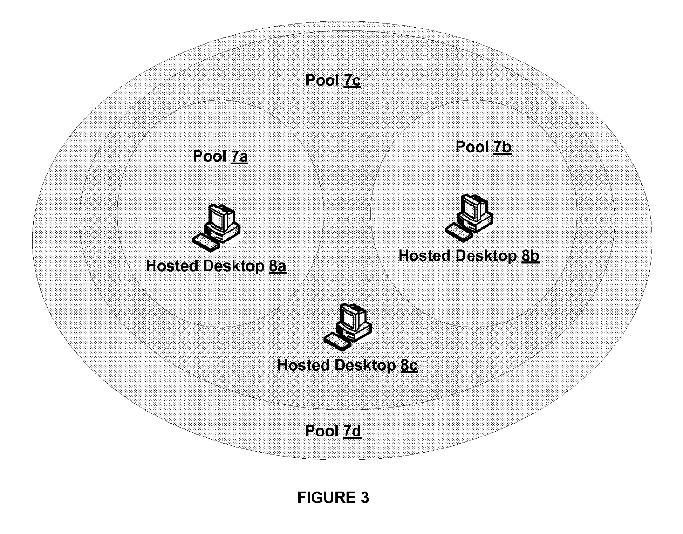

With regard to **Figure 3** all remote computing resources are members of one or more pools. As such, Hosted Desktop (a particular type of remote computing resource) **8a** is a member of Pool **7b,** Pool **7c,** and Pool **7d** but not Pool **7b.**

Resources available to users may of course vary among pools. When assigning a Hosted Desktop from Pool **7c** to a user then Hosted Desktop **8a, 8b,** or **8c** would be appropriate. However, assigning Hosted Desktop **8c** is a better use of resources than Hosted Desktops **8a** or **8b** because Hosted Desktop **8a** or **8b** can be substituted for **8c** without loss of functionality for the user, while assigning Hosted Desktop **8c** in place of **8a** will result in an inferior match for that user and should only be made if the pool **7a** is empty.

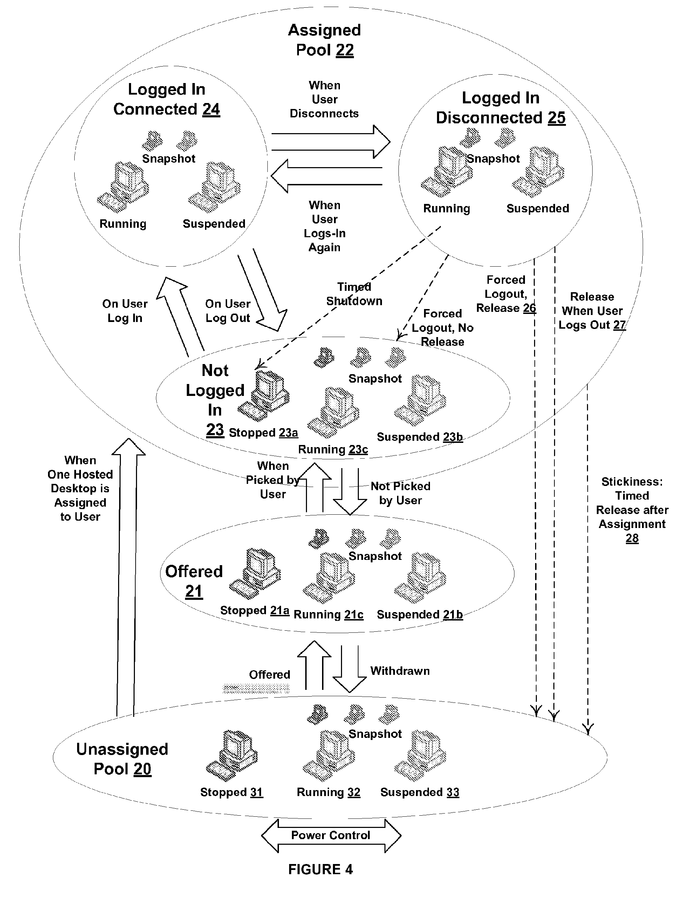

With regard to **Figure 4** the remote computing resources always have a state. This is derived from the characteristics of the remote computing resources. So when a remote computing resource is first discovered, and before it has been assigned then it will be in the Unassigned Pool **20** in either a Stopped **31,** Running **32,** or Suspended state **33.** In addition to these states, it is sometimes possible that the Hosted Desktop can be in a particular snapshot state. A snapshot is a capture of that operating system and associated applications at a moment in time. Once a snapshot is taken then that Hosted Desktop can be returned to the moment when the snapshot is taken.

When there is an event such as a user logging into the Connection Broker then the Connection Broker determines which remote computer resource to offer to the user according to a predetermined set of rules. It should be understood that users can be defined as either unique or global across domains. Based on this setting, the Connection Broker can correctly identify a user with the same user name, as being either the same or different physical user, and assign resources appropriately. As well, resources can be assigned based on the user's location. In operation, if the remote computing resource only belongs to that user then they will always get it. If it is a shared resource then the Connection Broker will pick a particular remote computer resource from the more appropriate Pool according to the predetermined set of rules and the meta-data associated with that resource. Offered remote computing resources are moved into the Offered **21** Pool which is a subset of the relevant Unassigned Pool **20.**

The user can then select one or more of the offered computing resources. The selected resources are then placed in the Not Logged In Pool **22,** which is a subset of the Offered Pool **21.**

It is useful to determine how to treat remote computing resources in the Offered Pool **21.** There is no guarantee that a user will pick any or all of the remote computing resources that they are offered. If they are assigned to a user as soon as they are offered then they will be unavailable for any other user. Equally if they are offered to several users at the same time (i.e., over allocated) then there is no guarantee that a user will get the remote computing resource that they desire.

In accordance with the present invention, it has been determined that a better approach is to allow over allocation along with intelligently picking and ranking the offered resources according to the meta-data associated with that resource. This is achieved by applying a weighting to each potential resource.

This process is further complicated by the fact that remote computing resources are not always completely stateless - in particular there is often a cache file stored within the permanent storage associated with the remote computing resource and this cache is tied to a particular user. So if a user is assigned the same remote computing resource from a pool of resources then that cache will not need to be flushed and recreated - improving the end user experience. Pooling in accordance with the present invention therefore provides for such improvement.

Once a remote computing resource has been picked by a user, and hence assigned, it becomes a member of the Assigned Pool **22,** and more particularly a member of the Not Logged In Pool **23** then typically that user is automatically logged into the remote computing resource and the user is connected to that resource, hence that resource moves to the Logged In Connected Pool **24.**

This logic is further complicated by the power state of the Hosted Desktop, so if a Hosted Desktop is stopped **21a** or suspended **21b** then it is often an unnecessary waste of resources to start the Hosted Desktop **23c** when offering it to the user. It is more efficient to select the running Hosted Desktops **21c** before the suspended **21b** or stopped **21a** ones, but if there are no running ones left to offer the suspended or stopped ones but not to start them unless they are picked by the user.

The user can then be disconnected from the remote computing resource, either intentionally or due to a network failure without logging out of the session - in this case the resource moves to the Logged In Disconnected Pool **25.**

The Hosted Desktop can be returned to the Not Logged In Pool **23** if the user logs out, or if an external event such as timer forces the user to be logged out.

In addition the Hosted Desktop can be released back to the unassigned pool **20** as a result of an event such as disconnecting or logging out **27,** or a timer expiring **28.**
Aspects of the invention may be defined by the following clauses:
1. A method of managing remote computing resources, said method comprising:
   discovering remote computing resources by means of external agents and external management systems;
   determining the characteristics of the discovered remote computing resources;
   sorting the characteristics into a hierarchy according to the source of the data;
   assigning control of particular remote computing resources to external agents or systems according to the hierarchy previously established;
   sorting the remote computing resources into pools according to these characteristics and predetermined rules; and
   further sorting of the remote computing resources into sub pools according to the state of that resource.
2. The method as defined in clause 1, wherein said method forms a management layer embodied within one or more computer processing units in the form of executable software instructions.
3. A management layer apparatus that manages remote computing resources, said apparatus comprising:
   a processing unit for discovering remote computing resources by means of external agents and external management systems;
   a processing unit for determining the characteristics of the discovered remote computing resources;
   a processing unit for sorting the characteristics into a hierarchy according to the source of the data;
   a processing unit for assigning control of particular remote computing resources to external agents or systems according to the hierarchy previously established;
   a processing unit for sorting the remote computing resources into pools according to these characteristics and predetermined rules; and
   a processing unit for further sorting of the remote computing resources into sub pools according to the state of that resource;
   wherein said processing units are embodied within one or more computer processing units in the form of executable software instructions.
4. A method of managing remote computing resources, said method comprising:
   gathering meta-data describing a particular remote computing resource; and
   consolidating said meta-data within a central database such that a most accurate source of a particular variable is given highest prominence.
5. The method as defined in clause 4 wherein said method further uses said meta-data to determine a most appropriate manner for controlling a remote computer resource.
6. The method as defined in clause 5 wherein said method further uses said meta-data so as to group one or more of said remote computer resources having equivalent properties into categories identified as pools.
7. The method as defined in clause 6 wherein said method further gathers said meta-data alongside user and client data and uses said meta-data and said user and client data so as to maintain the state of each remote computer resource.
8. A management layer apparatus that manages remote computing resources, said apparatus comprising:
   a processing unit for gathering meta-data describing a particular remote computing resource; and
   a processing unit for consolidating said meta-data within a central database such that a most accurate source of a particular variable is given highest prominence.
   wherein said processing units are embodied within one or more computer processing units in the form of executable software instructions.
9. The apparatus as defined in clause 8 further including a processing unit using said meta-data to determine a most appropriate manner for controlling a remote computer resource.
10. The apparatus as defined in clause 9 further including a processing unit using said meta-data so as to group one or more of said remote computer resources having equivalent properties into categories identified as pools.
11. The apparatus as defined in clause 10 further including a processing unit that gathers said meta-data alongside user and client data and uses said meta-data and said user and client data so as to maintain the state of each remote computer resource.

## Claims

1. A method of managing remote computing resources, said method comprising:
gathering, from multiple sources including a series of agents and external systems, meta-data describing a particular remote computing resource;
consolidating said meta-data within a central database such that a most accurate source of a particular variable is given highest prominence;
collating and storing said consolidated meta-data so that a most appropriate computing resource is assigned to a particular user or client device according to their need and remote computing resource availability at any given time; and
using said collated and stored meta-data, creating and maintaining a hierarchical data model for determining characteristics and state of said particular remote computing resource and ensuring that a most appropriate control system is used to manage said particular remote computing resource.

2. The method as claimed in Claim 1 wherein said method further uses said meta-data so as to group one or more of said remote computer resources having equivalent properties into categories identified as pools.

3. The method as claimed in Claim 2 wherein said method further gathers said meta-data alongside user and client data and uses said meta-data and said user and client data so as to maintain the state of each remote computer resource.

4. A computer-implemented management layer apparatus that manages remote computing resources using a computer and software executable on the computer, said apparatus comprising:
a processing unit for gathering, from multiple sources including a series of agents and external systems, meta-data describing a particular remote computing resource; and
a processing unit
for consolidating said meta-data within a central database;
for collating and storing said meta-data so that a most appropriate computing resource is assigned to a particular user or client device according to their need and remote computing resource availability at any given time, and
for using said collated and stored meta-data for creating and maintaining a hierarchical data model for determining characteristics and state of said particular remote computing resource and ensuring that a most appropriate control system is used to manage said particular remote computing resource;
wherein said processing units are embodied within one or more computer processing units in the form of executable software instructions.

5. The apparatus as claimed in Claim 4 further including a processing unit using said meta-data so as to group one or more of said remote computer resources having equivalent properties into categories identified as pools.

6. The apparatus as claimed in Claim 5 further including a processing unit that gathers said meta-data alongside user and client data and uses said meta-data and said user and client data so as to maintain the state of each remote computer resource.
